# EUROPEAN PATENT APPLICATION

(11) **EP 4 834 567 A1**
(43) Date of publication of application: **04.11.2026**
(21) Application number: 24911047.9
(22) Date of filing: 23.12.2024
(51) Int. Cl.: B29C 64/209, B29C 64/118, B29C 64/295, B33Y 30/00

(54) **QUICK-MELTING NOZZLE FOR 3D PRINTER, PREHEATING MEMBER AND PREPARATION METHOD**

(30) Priority: 31.12.2023 CN 202311872334
(71) Applicant: Zhengzhou Suzao Technology Co., Ltd., Zhengzhou, Henan 450048 (CN)
(72) Inventor: SHEN, Kang, Zhengzhou, Henan 450066 (CN); WANG, Qindong, Zhengzhou, Henan 450066 (CN); DUAN, Zhihui, Zhengzhou, Henan 450066 (CN); CHENG, Shuo, Zhengzhou, Henan 450066 (CN); SU, Dongdong, Zhengzhou, Henan 450066 (CN); YUE, Liuyang, Zhengzhou, Henan 450066 (CN)
(74) Representative: Dilg, Haeusler, Schindelmann Patentanwaltsgesellschaft mbH
(86) International application number: PCT/CN2024/141516
(87) International publication number: WO 2025/140119

(57) **Abstract**

The present disclosure relates to a quick-melting nozzle for a 3D printer, a preheating member and a preparation method. The nozzle comprises a nozzle body, wherein the nozzle body is externally connected to a heat source, filaments are melted in the nozzle body and extruded from a lower end of the nozzle body, a circulation channel is provided in the nozzle body in an axial direction of the nozzle body, a quick-melting portion is provided at a lower portion of the circulation channel and connected to the nozzle body, a gap is reserved between the quick-melting portion and an inner wall of the circulation channel, and the molten filaments circulate at the gap between the quick-melting portion and the inner wall of the circulation channel. In order to solve or at least alleviate the problem of being unable to fully melt the filaments in the nozzle while improving the extrusion efficiency of the nozzle of the 3D printer, the present disclosure provides a quick-melting nozzle for a 3D printer.

## Description

### CROSS-REFERENCE TO THE RELATED APPLICATIONS

The present invention claims priority to Chinese Patent Application No. 2023118723343, filed with the Chinese Patent Office on December 31, 2023 and entitled " QUICK-MELTING NOZZLE FOR 3D PRINTER", the entire contents of which are incorporated herein by reference.

### TECHNICAL FIELD

The present invention belongs to the technical field of 3D printers, and more particularly relates to a quick-melting nozzle for a 3D printer, a preheating member and a preparation method.

### BACKGROUND

3D printing does not manufacture parts by subtracting material as in traditional machining, but rather by adding material to manufacture parts. Parts are manufactured by a 3D printer according to a digital model, the 3D printer melts filaments and extrudes the filaments from a printer nozzle, and after the melted filaments leave the nozzle of the printer, the filaments become solid, thereby achieving 3D printing of the parts.

The filaments enter through a larger inlet hole at an upper end of the nozzle, and are heated and melted in the nozzle with an externally connected heat source, and then extruded from a smaller outlet hole at a tip end of the nozzle.

In order to shorten the printing time and improve the printing efficiency, the extrusion efficiency of the outlet hole at the tip end of the nozzle is increased. However, a consequent problem is that the filaments cannot be fully melted in the nozzle, thereby reducing the extrusion efficiency and also affecting the printing quality, thus limiting the printing speed of the 3D printer.

### SUMMARY

The object of the present invention is to overcome the deficiencies in the prior art, and solve or at least alleviate the problem that the filaments cannot be fully melted in the nozzle while improving the extrusion efficiency of the nozzle of the 3D printer. Therefore, a quick-melting nozzle for a 3D printer, a preheating member and a preparation method are provided.

The present invention is implemented through the following technical solutions.

Provided is a quick-melting nozzle for a 3D printer, wherein the nozzle includes a nozzle body, the nozzle body is externally connected to a heat source, filaments are melted in the nozzle body and extruded from a lower end of the nozzle body, a circulation channel is provided in the nozzle body in an axial direction of the nozzle body, a quick-melting portion is provided at a lower portion of the circulation channel and connected to the nozzle body, a gap is reserved between the quick-melting portion and an inner wall of the circulation channel, and the molten filaments circulate at the gap between the quick-melting portion and the inner wall of the circulation channel.

In an embodiment, the quick-melting portion is in a shape of a vertically disposed flat plate, the quick-melting portion is disposed in a radial direction of the circulation channel, and two ends of the quick-melting portion are connected to the inner wall of the circulation channel.

In an embodiment, the quick-melting portion includes two plate bodies disposed parallel and spaced apart from each other, the two plate bodies are disposed a mirror-symmetrical manner with respect to an axial central plane of the circulation channel, and two ends of each plate body are connected to the inner wall of the circulation channel.

In an embodiment, the quick-melting portion includes a plurality of ridge blocks, the ridge blocks are disposed on the inner wall of the circulation channel along a height direction of the circulation channel, one side of each ridge block is connected to the inner wall of the circulation channel and the other side extends toward a central axis of the circulation channel, a top surface of each ridge block is an inclined surface that is higher on the outside and lower on the inside, and the plurality of ridge blocks are circumferentially and uniformly distributed at intervals along the circulation channel.

In an embodiment, the quick-melting portion includes a tube body, the tube body is coaxially disposed at a lower portion of the circulation channel, a plate body is disposed between the tube body and the circulation channel, the plate body is disposed in a radial direction of the circulation channel, two ends of the plate body are respectively connected to an outer wall of the tube body and the inner wall of the circulation channel, and a plurality of plate bodies are circumferentially and uniformly distributed at intervals along the circulation channel.

In an embodiment, the quick-melting portion includes a spiral body, the spiral body is in a columnar spiral structure, and the spiral body is coaxially and fixedly disposed at a lower portion of the circulation channel.

In an embodiment, the quick-melting portion includes two plate bodies disposed in a crossed arrangement, the two plate bodies are disposed in a cruciform shape, and two ends of each plate body are connected to the inner wall of the circulation channel.

In an embodiment, the quick-melting portion includes a column body, the column body is disposed at a lower portion of the circulation channel, an outer wall of the column body is connected to the inner wall of the circulation channel, a quick-melting hole is provided at a middle portion of the column body in an axial direction thereof, the quick-melting hole is eccentrically disposed with respect to the circulation channel, and a plurality of quick-melting holes are circumferentially and uniformly distributed with respect to a central axis of the circulation channel.

In an embodiment, the quick-melting portion includes a plurality of block bodies, the plurality of block bodies are longitudinally stacked and laterally staggered and disposed at a lower portion of the circulation channel, each block body is in a shape of a semi-circular fan, a downward protruding strip is provided at a circumferential position of a lower surface of each block body, a circumferential side surface of each block body is in contact with the inner wall of the circulation channel, and a lower surface of the protruding strip of the block body located above is in contact with an upper surface of the block body located below.

In an embodiment, the nozzle further includes a preheating member, the preheating member is disposed at a front end of the circulation channel of the nozzle body, a preheating channel is provided at a middle portion of the preheating member in an axial direction thereof, a lower end of the preheating channel is connected to the circulation channel of the nozzle body, and the preheating member is thermally connected to the heat source.

In an embodiment, an upper portion of the preheating channel is provided with an inlet section, the preheating channel includes a separation section and a plurality of flow-guiding sections, the separation section is coaxially disposed with the inlet section, the flow-guiding sections are disposed at an outer side of the separation section, and one side of each flow-guiding section close to the separation section is connected to the separation section; the separation section is in a shape of a multi-step stepped hole that is larger at the top and smaller at the bottom.

In an embodiment, a side wall of the nozzle body located within a cavity is provided with a concave capacity-increasing groove, the capacity-increasing groove is disposed along a height direction of the nozzle body, and a plurality of capacity-increasing grooves are uniformly distributed along an outer wall of the nozzle body.

In an embodiment, a lower portion of the circulation channel of the nozzle body is provided with an opening/closing mechanism, the lower end of the circulation channel is open when the opening/closing mechanism is in an open state, and the lower end of the circulation channel is closed when the opening/closing mechanism is in a closed state.

The present invention also provides a preheating member, the preheating member is disposed at a front end of the circulation channel of the nozzle body, and the preheating member is provided with a preheating channel in an axial direction thereof.

In an embodiment, the preheating channel includes a separation section, the separation section is coaxially disposed with the preheating channel, and the separation section is configured to remove an outer periphery of the filaments.

In an embodiment, the separation section is in a shape of a multi-step stepped shape that is larger at the top and smaller at the bottom.

In an embodiment, a shape of a cross-sectional contour of the separation section is a quadrilateral.

In an embodiment, the cross-sectional contour of the separation section includes a plurality of arc segments located on a same circle, and a groove extending outwardly in a radial direction of the circle is formed between two adjacent arc segments.

In an embodiment, the preheating channel further includes at least one flow-guiding section, the flow-guiding section is disposed parallel to an axis of the preheating channel, and the flow-guiding section is configured to guide the outer periphery of the filaments.

In an embodiment, a cross-sectional area of the flow-guiding section is equal everywhere in an axial direction of the preheating channel.

In an embodiment, the cross-sectional contour of the flow-guiding section includes a plurality of sub-contours, and the plurality of sub-contours are symmetrically distributed with respect to a central axis of the preheating channel.

In an embodiment, a shape of each sub-contour is a "V" shape; or, a shape of each sub-contour is circular.

In an embodiment, the cross-sectional contour of the flow-guiding section includes at least two arc-shaped sub-contours, and the at least two arc-shaped sub-contours are symmetrically distributed with respect to the central axis of the preheating channel.

In an embodiment, the cross-sectional contour of the flow-guiding section includes three vertex angles, the three vertex angles are symmetrically distributed with respect to the central axis of the preheating channel, and angles of the three vertex angles are identical and are acute angles.

The present invention also provides a preparation method for a preheating member, for preparing the preheating member of the above embodiment. The preparation method includes: providing a column body made of a high thermal conductivity material; preparing, at an upper portion of the column body, a first connection channel configured to be connected to a heat break; preparing, at a lower portion of the column body, a second connection channel configured to be connected to the nozzle body; providing a stepped hole at a middle portion of the column body, wherein the stepped hole is in communication with the first connection channel and the second connection channel respectively; and providing a flow guide hole in a step of the stepped hole.

Through the above technical solutions, the beneficial effects of the present invention are:
the quick-melting nozzle for a 3D printer provided by the embodiment of the present invention has a quick-melting portion disposed at a lower portion of the circulation channel of the nozzle body, the quick-melting portion is thermally connected to the nozzle body, through the combination of the quick-melting portion and the circulation channel, the filaments in the circulation channel are heated simultaneously from inside and outside, and the heat receiving area of the filaments in the circulation channel is increased, thereby increasing the heat conduction amount between the nozzle body and the filaments, improving the melting efficiency, and ensuring that the filaments are melted efficiently and rapidly in the nozzle.

Through the preheating member disposed at an upper side of the circulation channel, the preliminary melting time of the filaments is shortened, and in the preheating member, the melted filaments can also be separated from the unmelted filaments, so that the preheating member directly heats the unmelted filaments after separation, which further improves the melting efficiency.

The capacity-increasing grooves are provided on the nozzle body, and together with an inner wall of the preheating member, the capacity-increasing grooves constitute a bypass channel, which facilitates reducing the pressure of the filaments passing through the quick-melting portion, thereby facilitating rapid extrusion of the filaments. Moreover, the bypass channel also further increases the thermal contact area of the filaments at the quick-melting portion, which further facilitates rapid heating and melting of the filaments. Furthermore, because the bypass channel increases the thermal contact area of the filaments at the quick-melting portion, when the filaments absorb the same amount of heat, the heat conduction distance required in the quick-melting portion is shortened, and therefore the quick-melting portion of the present invention is relatively short and small, which is conducive to improving the stability of the movement of the nozzle body during the printing process.

### BRIEF DESCRIPTION OF THE DRAWINGS

FIG. 1 is a first schematic structural view of the present invention;
FIG. 2 is a transverse cross-sectional view of FIG. 1 of the present invention;
FIG. 3 is a second schematic structural view of the present invention;
FIG. 4 is a transverse cross-sectional view of FIG. 3 of the present invention;
FIG. 5 is a third schematic structural view of the present invention;
FIG. 6 is a transverse cross-sectional view of FIG. 5 of the present invention;
FIG. 7 is a fourth schematic structural view of the present invention;
FIG. 8 is a transverse cross-sectional view of FIG. 7 of the present invention;
FIG. 9 is a fifth schematic structural view of the present invention;
FIG. 10 is a transverse cross-sectional view of FIG. 9 of the present invention;
FIG. 11 is a schematic structural view of the quick-melting portion in FIG. 9 of the present invention;
FIG. 12 is a sixth schematic structural view of the present invention;
FIG. 13 is a transverse cross-sectional view of FIG. 12 of the present invention;
FIG. 14 is a seventh schematic structural view of the present invention;
FIG. 15 is a transverse cross-sectional view of FIG. 14 of the present invention;
FIG. 16 is an eighth schematic structural view of the present invention;
FIG. 17 is a transverse cross-sectional view of FIG. 16 of the present invention;
FIG. 18 is a schematic structural view of the quick-melting portion in FIG. 16 of the present invention;
FIG. 19 is a first schematic structural view of the preheating member of the present invention;
FIG. 20 is a first schematic cross-sectional view of the flow-guiding section of the present invention;
FIG. 21A is a second schematic cross-sectional view of the flow-guiding section of the present invention;
FIG. 21B is a third schematic cross-sectional view of the flow-guiding section of the present invention;
FIG. 21C is a fourth schematic cross-sectional view of the flow-guiding section of the present invention;
FIG. 21D is a fifth schematic cross-sectional view of the flow-guiding section of the present invention;
FIG. 21E is a sixth schematic cross-sectional view of the flow-guiding section of the present invention;
FIG. 22 is a second schematic structural view of the preheating member of the present invention;
FIG. 23 is a top view of FIG. 22 of the present invention;
FIG. 24 is a third schematic structural view of the preheating member of the present invention;
FIG. 25 is a top view of FIG. 24 of the present invention;
FIG. 26 is a ninth schematic structural view of the present invention;
FIG. 27 is a cross-sectional view taken along line A-A in FIG. 26 of the present invention;
FIG. 28 is a tenth schematic structural view of the present invention;
FIG. 29 is an eleventh schematic structural view of the present invention;
FIG. 30 is a schematic structural view of the opening/closing plate in a closed state of the present invention;
FIG. 31 is a schematic structural view of the opening/closing plate in an open state of the present invention; and
FIG. 32 is a twelfth schematic structural view of the present invention;
Numeral reference: 1-nozzle body; 1a-capacity-increasing groove; 2-circulation channel; 3-quick-melting portion; 4-preheating member; 41-first connection section; 41a-first connection channel; 42-second connection section; 42a-second connection channel; 5-preheating channel; 51-separation section; 52-flow-guiding section; 521, 522-arc-shaped sub-contour; 523-rectangular groove; 524-sub-contour; 525-vertex angle; 6-opening/closing ball; 7-opening/closing plate; 8-opening/closing block; 9-heat break; and 10-flow guide hole.

### DETAILED DESCRIPTION OF THE EMBODIMENTS

In the description of the present invention, it should also be noted that, unless otherwise explicitly specified and limited, the terms "arrange", "mount", "connect" and "link" should be understood in a broad sense. For example, the connection can be a fixed connection, a detachable connection, or an integrated connection; the connection can be a mechanical connection or an electrical connection; the connection can be a direct connection or an indirect connection through an intermediate medium; and the connection can be an internal communication between two elements. For a person of ordinary skill in the art, the specific meanings of the above terms in the present invention can be understood according to specific circumstances.

The technical solutions in the embodiments of the present invention will be clearly and completely described below in conjunction with the drawings in the embodiments of the present invention. Apparently, the described embodiments are merely a part of the embodiments of the present invention, rather than all embodiments. Based on the embodiments in the present invention, all other embodiments obtained by a person of ordinary skill in the art without inventive efforts shall fall within the protection scope of the present invention.

### Embodiment 1:

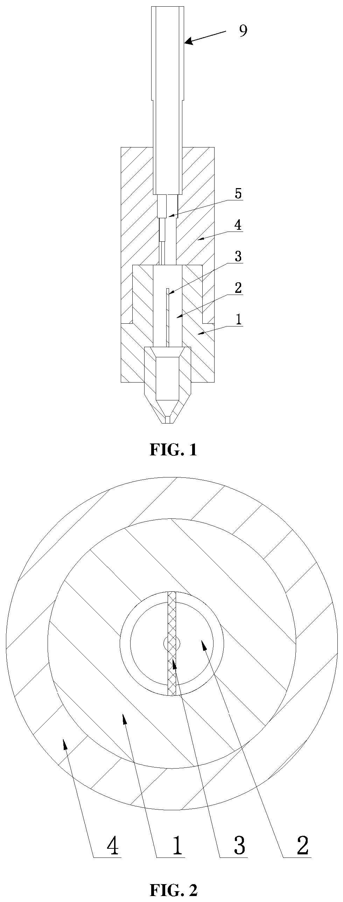

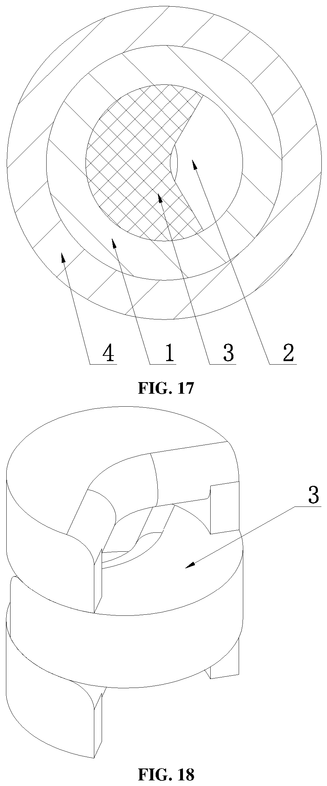

As shown in FIG. 1 to FIG. 18, a quick-melting nozzle for a 3D printer is provided, wherein the nozzle includes a nozzle body 1, the nozzle body 1 is externally connected to a heat source, filaments are melted in the nozzle body 1 and extruded from a lower end of the nozzle body 1, a circulation channel 2 is provided in the nozzle body 1 in an axial direction of the nozzle body 1, a quick-melting portion 3 is provided at a lower portion of the circulation channel 2 and the quick-melting portion 3 is connected to the nozzle body 1, a gap is reserved between the quick-melting portion 3 and an inner wall of the circulation channel 2, and the molten filaments circulate at the gap between the quick-melting portion 3 and the inner wall of the circulation channel 2.

The quick-melting portion can be integrally formed with the nozzle body, or can be fixedly connected to the nozzle body.

The quick-melting nozzle for a 3D printer of the present invention has the quick-melting portion 3 disposed at a lower portion of the circulation channel 2 of the nozzle body 1, the quick-melting portion 3 is thermally connected to the nozzle body 1. Through the combination of the quick-melting portion 3 and the circulation channel 2, the filaments in the circulation channel 2 are heated simultaneously from inside and outside, and the heat receiving area of the filaments in the circulation channel 2 is increased, thereby increasing the heat conduction amount between the nozzle body 1 and the filaments. A portion of the filaments that is not easily heated is directly heated, which improves the melting efficiency, and ensures that the filaments are melted efficiently and rapidly in the nozzle.

As shown in FIG. 1 and FIG. 2, in an implementation of the present embodiment, the quick-melting portion 3 is in a shape of a vertically disposed flat plate, the quick-melting portion 3 is disposed in a radial direction of the circulation channel 2, and two ends of the quick-melting portion 3 are connected to the inner wall of the circulation channel 2; the flat plate-shaped quick-melting portion 3 facilitates cutting the filaments from the middle, dividing the filaments into two independent heating regions, and increasing the overall heat receiving area; and in a more optimized structure, an upper end of the flat plate-shaped quick-melting portion 3 is in a blade-edge shape, which makes it easier to split the filaments.

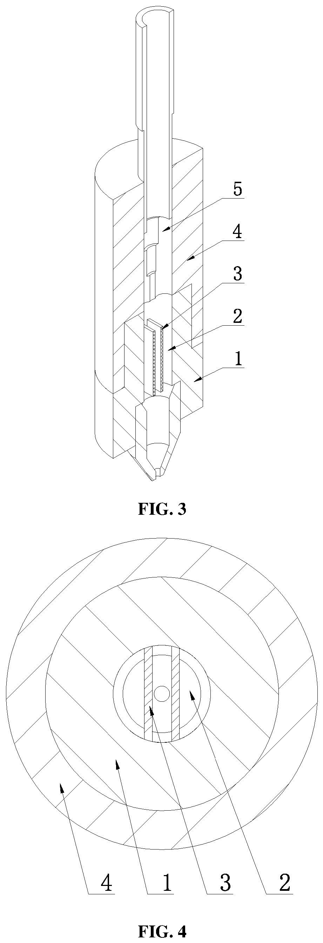

As shown in FIG. 3 and FIG. 4, in order to further increase the heat receiving area, the quick-melting portion 3 includes two plate bodies disposed parallel and spaced apart from each other, the two plate bodies are disposed in a mirror-symmetrical manner with respect to an axial central plane of the circulation channel 2, and two ends of each plate body are connected to the inner wall of the circulation channel 2.

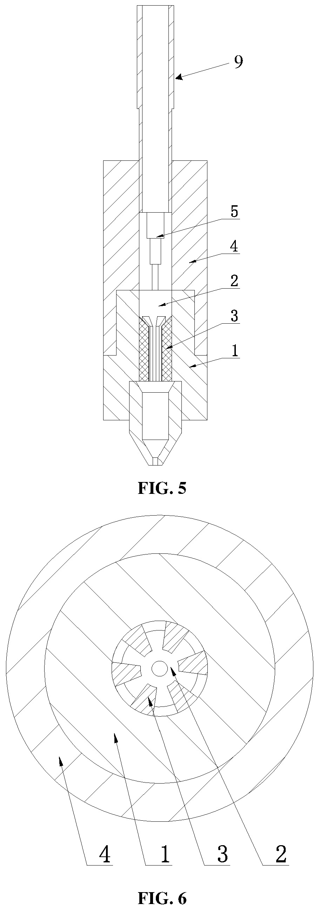

As shown in FIG. 5 and FIG. 6, in order to peel off an already melted portion of the filaments on the outer side, so as to facilitate heating a portion of the filaments that is not easily heated inside, the quick-melting portion 3 includes a plurality of ridge blocks, the ridge blocks are disposed on the inner wall of the circulation channel 2 along a height direction of the circulation channel 2, one side of each ridge block is connected to the inner wall of the circulation channel 2 and the other side extends toward a central axis of the circulation channel 2, a top surface of each ridge block is an inclined surface that is higher on the outside and lower on the inside, and the plurality of ridge blocks are circumferentially and uniformly distributed at intervals along the circulation channel 2.

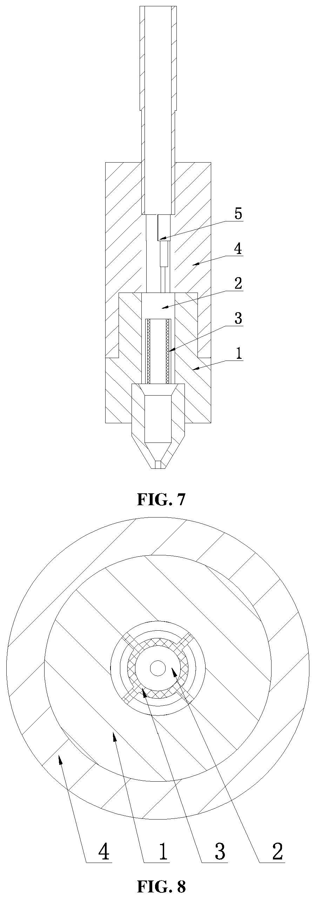

As shown in FIG. 7 and FIG. 8, in another implementation of the present embodiment, in order to facilitate peeling off the already melted portion on the outer side of the filaments and to increase the heat receiving area, the quick-melting portion 3 includes a tube body, the tube body is coaxially disposed at a lower portion of the circulation channel 2, a plate body is disposed between the tube body and the circulation channel 2, the plate body is disposed in a radial direction of the circulation channel 2, two ends of the plate body are respectively connected to an outer wall of the tube body and the inner wall of the circulation channel 2, and a plurality of plate bodies are circumferentially and uniformly distributed at intervals along the circulation channel 2; and an inner cross-sectional area of the tube body is smaller than a cross-sectional area of the filaments. When the filaments pass through the quick-melting portion 3, the already melted portion on the outer side of the filaments is peeled off from the outer side of the tube body, the unmelted portion inside the filaments enters the tube body, and meanwhile both the tube body and the plate body are thermally connected to the nozzle body 1, which greatly increases the heat receiving area.

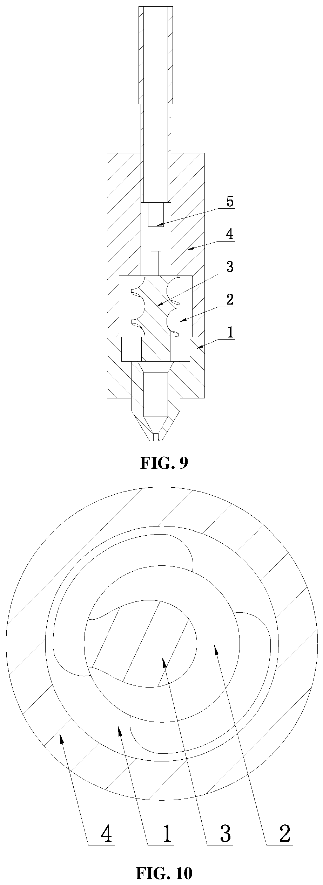

As shown in FIG. 9 to FIG. 11, in another implementation of the present embodiment, the quick-melting portion 3 includes a spiral body, the spiral body is in a columnar spiral structure, and the spiral body is coaxially and fixedly disposed at a lower portion of the circulation channel 2. The outer surface area of the spiral body is large, which increases the heat receiving area. Meanwhile, the spiral structure drives the molten filaments to flow spirally, improving the uniformity of heating.

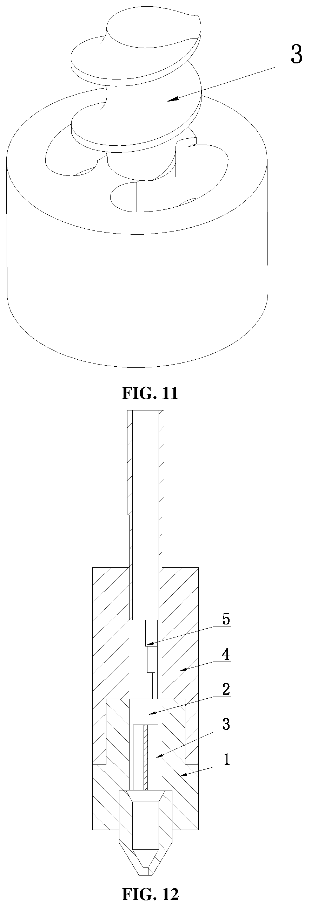

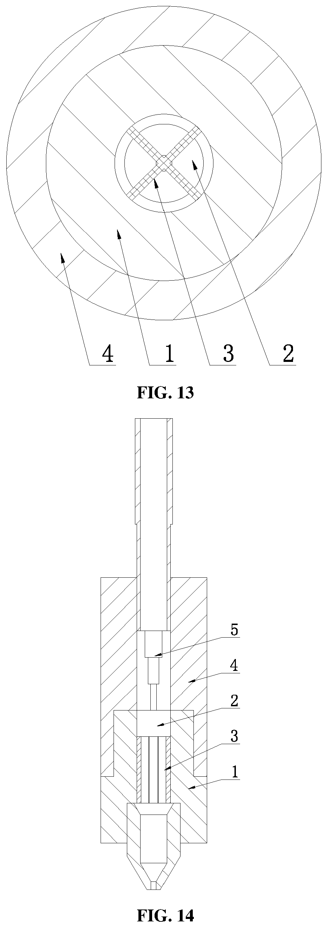

As shown in FIG. 12 and FIG. 13, in order to cut the filaments more fully, the quick-melting portion 3 includes two plate bodies disposed in a crossed arrangement, the two plate bodies are disposed in a cruciform shape, and two ends of each plate body are connected to the inner wall of the circulation channel 2.

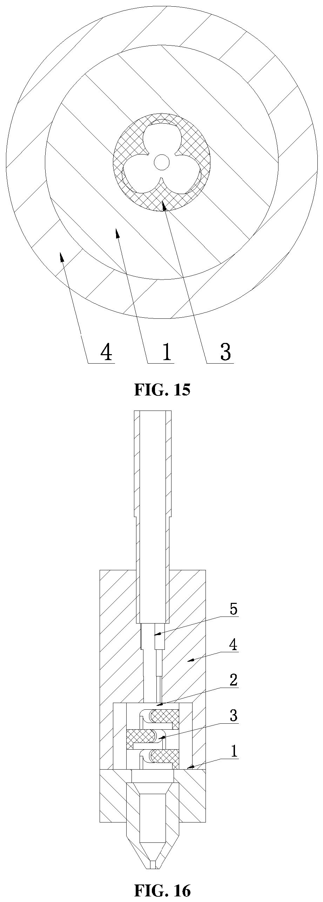

As shown in FIG. 14 and FIG. 15, in another implementation of the present embodiment, both the upper and lower surfaces of the column body can perform heating, the quick-melting portion 3 includes a column body, the column body is disposed at a lower portion of the circulation channel 2, an outer wall of the column body is connected to the inner wall of the circulation channel 2, a quick-melting hole is provided at a middle portion of the column body in an axial direction of the column body, the quick-melting hole is eccentrically disposed with respect to the circulation channel 2, and a plurality of quick-melting holes are circumferentially and uniformly distributed with respect to a central axis of the circulation channel 2.

As shown in FIG. 16 to FIG. 18, in order to increase the heating duration, the quick-melting portion 3 includes a plurality of block bodies, the plurality of block bodies are longitudinally stacked and laterally staggered and disposed at a lower portion of the circulation channel 2, each block body is in a shape of a semi-circular fan, a downward protruding strip is provided at a circumferential position of a lower surface of each block body, a circumferential side surface of each block body is in contact with the inner wall of the circulation channel 2, and a lower surface of the protruding strip of the block body located above is in contact with an upper surface of the block body located below; and an S-shaped channel is formed between the plurality of block bodies, which increases the heating path and effectively increases the heating duration, ensuring the sufficiency of melting.

### Embodiment 2:

The nozzle further includes a preheating member 4, the preheating member 4 is disposed at a front end of the circulation channel 2 of the nozzle body 1, a preheating channel 5 is provided at a middle portion of the preheating member 4 in an axial direction thereof, a lower end of the preheating channel 5 is connected to the circulation channel 2 of the nozzle body 1, and the preheating member 4 is thermally connected to the heat source.

The preheating member 4 can be disposed at an upper side of the circulation channel 2 to preheat the filaments. Moreover, in the preheating member 4, the melted filaments can also be separated from the unmelted filaments, so that the preheating member 4 directly heats the unmelted filaments after separation, which further improves the melting efficiency.

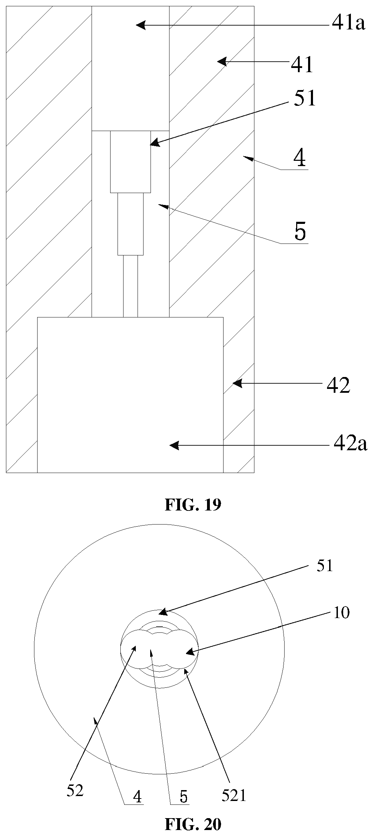

As shown in FIG. 19 and FIG. 20, in order to optimize the product structure, an upper portion of the preheating channel 5 is provided with a cylindrical inlet section, the preheating channel 5 includes one separation section 51 and a plurality of flow-guiding sections 52, a cross section of the separation section 51 is in a shape of a circular segment and the separation section 51 is coaxially disposed with the inlet section, two flow-guiding sections are respectively disposed at two opposite sides of the separation section in a mirror-symmetrical manner, a cross section of each flow-guiding section is in a shape of a circular segment, a circular surface of each flow-guiding section is located at a side away from the separation section and tangent to an inner wall of the inlet section, and one side of each flow-guiding section close to the separation section is connected to the separation section. Further, the separation section is in a shape of a multi-step stepped hole that is larger at the top and smaller at the bottom; and during preheating, an already melted portion on the outer periphery of the filaments is gradually peeled off by the stepped hole structure of the separation section, and then flows down through the flow-guiding sections.

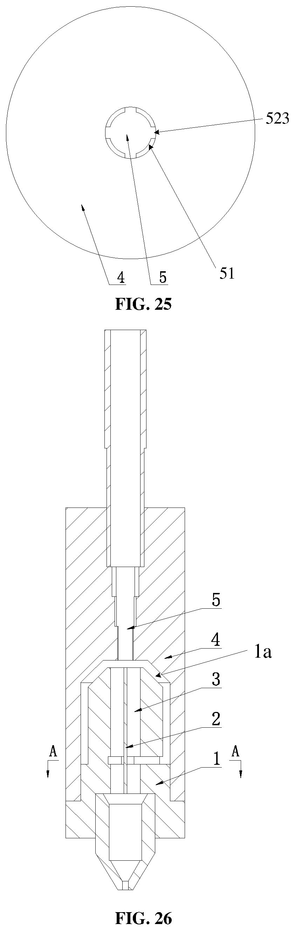

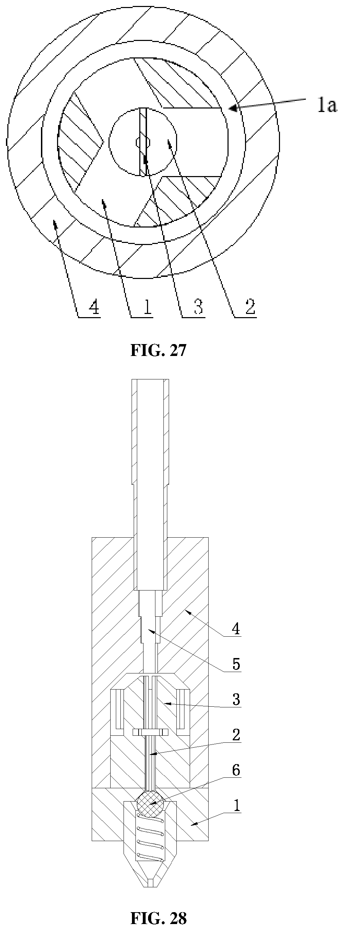

As shown in FIG. 26 and FIG. 27, in an embodiment, in order to increase the capacity inside the nozzle, a side wall of the nozzle body 1 located within a cavity can be provided with a concave capacity-increasing groove 1a, the capacity-increasing groove 1a is disposed along a height direction of the nozzle body 1, and a plurality of capacity-increasing grooves 1a are uniformly distributed along an outer wall of the nozzle body 1, so as to increase the capacity inside the nozzle.

### Embodiment 3:

The present invention also provides a preheating member 4. As shown in FIG. 19 and FIG. 20, the preheating member 4 is disposed at a front end of the circulation channel of the nozzle body 1, and the preheating member 4 is provided with a preheating channel 5 in an axial direction thereof.

In some examples, an upper portion of the preheating member 4 can be provided with a first connection section 41 configured to be connected to a heat break 9, an interior of the first connection section 41 can define a first connection channel 41a in communication with the preheating channel 5; a lower portion of the preheating member 4 can be provided with a second connection section 42 configured to be connected to the nozzle body 1, an interior of the second connection section 42 can define a second connection channel 42a in communication with the preheating channel 5; and a cross-sectional area of the first connection channel 41a can be smaller than a cross-sectional area of the second connection channel 42a.

In an embodiment, the preheating channel 5 can include a separation section 51, the separation section 51 is coaxially disposed with the preheating channel 5, and the separation section 51 is configured to remove an outer periphery of the filaments.

As shown in FIG. 19 and FIG. 20, in an embodiment, the separation section 51 can be in a shape of a multi-step stepped shape that is larger at the top and smaller at the bottom. By way of example, the separation section 51 can include a plurality of step holes connected in sequence, a lowermost step hole among the plurality of step holes can be connected to the second connection channel 42a, and after the outer periphery of the filaments is peeled off, a remaining core portion of the filaments can flow into the second connection channel 42a through the lowermost step hole.

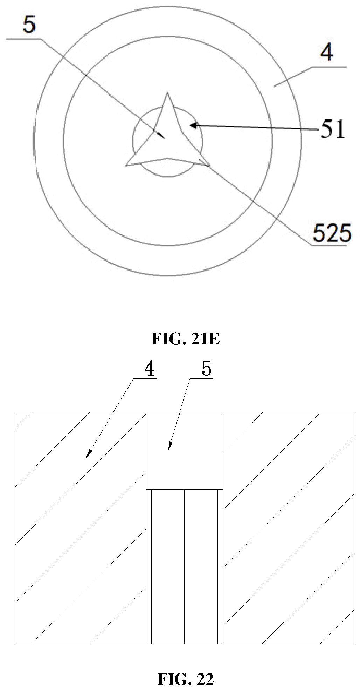

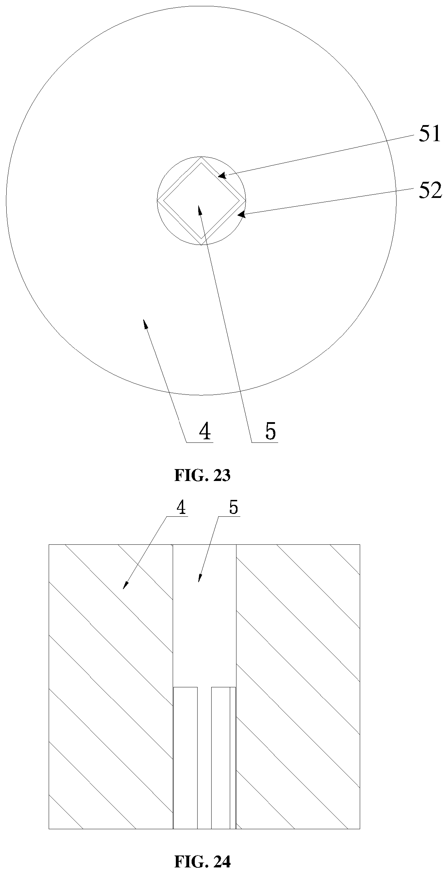

As shown in FIG. 22 and FIG. 23, in an embodiment, a shape of a cross-sectional contour of the separation section 51 can be a quadrilateral. For example, the shape of the cross-sectional contour of the separation section 51 can be a quadrilateral such as a square, a rhombus, or a rectangle. The shape of the cross-sectional contour of the separation section 51 can be an inscribed quadrilateral of the cross-sectional contour shape of the preheating channel 5.

In an embodiment, the preheating channel 5 can further include at least one flow-guiding section 52, the flow-guiding section 52 is disposed parallel to an axis of the preheating channel 5, and the flow-guiding section 52 is configured to guide an outer periphery of the filaments. In some examples, during preheating, an already softened portion on the outer periphery of the filaments can be gradually peeled off by the stepped hole structure of the separation section 51, and flow down through the flow-guiding section 52.

In an embodiment, a cross-sectional area of the flow-guiding section 52 can be equal everywhere in an axial direction of the preheating channel 5.

In an embodiment, a cross-sectional contour of the flow-guiding section 52 can include a plurality of sub-contours 524, and the plurality of sub-contours 524 can be symmetrically distributed with respect to a central axis of the preheating channel 5.

In an embodiment, a shape of each sub-contour 524 can be a "V" shape; or, a shape of each sub-contour 524 can be circular.

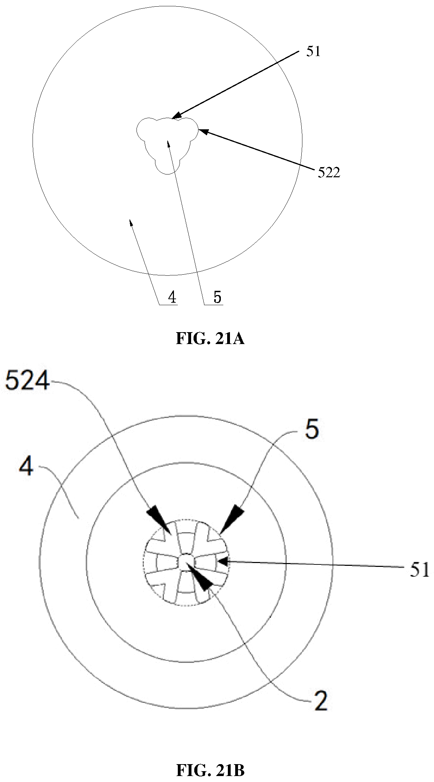

In some examples, as shown in FIG. 21B, a shape of each sub-contour 524 can be a "V" shape, preferably, the cross-sectional contour of the flow-guiding section 52 can include four "V"-shaped sub-contours 524, and a softened outer periphery of the filaments can be removed by the separation section 51 and can flow down through the "V"-shaped sub-contours 524.

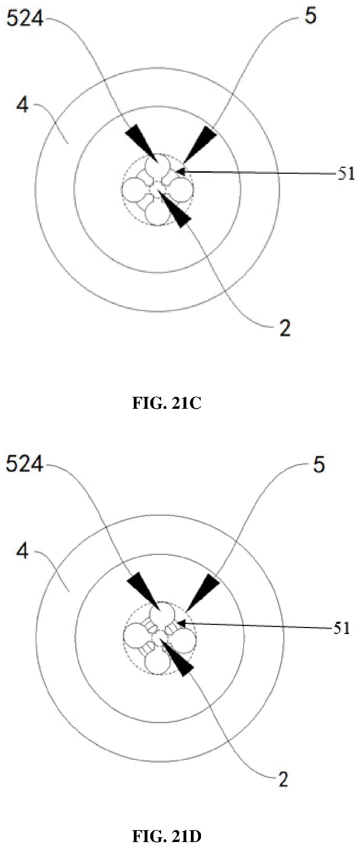

In other examples, as shown in FIG. 21C, a shape of each sub-contour 524 can be circular, preferably, the cross-sectional contour of the flow-guiding section 52 can include four circular sub-contours 524, and a melted outer periphery of the filaments can be removed by the separation section 51 and can flow down through the four circular sub-contours 524.

As shown in FIG. 21D, a shape of each sub-contour 524 can be circular, preferably, the cross-sectional contour of the flow-guiding section 52 can include four circular sub-contours 524, and a melted outer periphery of the filaments can be gradually peeled off by the stepped structure of the separation section 51 and flow down through the flow-guiding section 52.

In an embodiment, the cross-sectional contour of the flow-guiding section 52 can include at least two arc-shaped sub-contours, and the at least two arc-shaped sub-contours can be symmetrically distributed with respect to a central axis of the preheating channel 5.

In some examples, as shown in FIG. 20, the cross-sectional contour of the flow-guiding section 52 can include two arc-shaped sub-contours 521, the two arc-shaped sub-contours 521 can be symmetrically distributed with respect to the central axis of the preheating channel 5, and the arc-shaped sub-contours 521 can be major arcs.

In other examples, as shown in FIG. 21A, the cross-sectional contour of the separation section 51 can be circular, the cross-sectional contour of the flow-guiding section 52 can include three arc-shaped sub-contours 522, the three arc-shaped sub-contours 522 can be symmetrically distributed with respect to the central axis of the preheating channel 5, and the arc-shaped sub-contours 522 can be minor arcs or semicircles.

As shown in FIG. 21E, in an embodiment, a cross-sectional contour shape of the separation section 51 can be in a shape of a circular segment, the cross-sectional contour of the flow-guiding section 52 can include three vertex angles 525, the three vertex angles 525 can be symmetrically distributed with respect to the central axis of the preheating channel 5, and the angles of the three vertex angles 525 are identical and are acute angles.

As shown in FIG. 24 and FIG. 25, in an embodiment, a cross section of the separation section 51 can include a plurality of arc segments located on a same circle, and a rectangular groove 523 extending outwardly in a radial direction of the circle is formed between two adjacent arc segments, and the plurality of rectangular grooves 523 constitute the flow-guiding section 52.

### Embodiment 4:

The present invention also provides a preparation method for the preheating member 4, for preparing the preheating member 4 in the above embodiment of the present invention. As shown in FIG. 19 and FIG. 20, the preparation method can include the following steps:
S1: providing a column body made of a high thermal conductivity material.

In some examples, the column body can be made of a metallic thermal conductivity material, which provides mechanical strength while enabling preheating of the filaments.

S2: Preparing a first connection channel 41 at an upper portion of the column body, the first connection channel 41 being configured to be connected to the heat break 9.

In some examples, a connection hole configured to be connected to the heat break 9 can be prepared at the upper portion of the column body, and the connection hole can form the first connection channel 41. The heat break 9 and the first connection channel 41 can be connected by an interference fit or can be connected by threading. The present invention does not specifically limit the connection manner between the heat break 9 and the first connection channel 41.

S3: Preparing a second connection channel 42 at a lower portion of the column body, the second connection channel 42 being configured to be connected to the nozzle body 1.

In some examples, a connection hole configured to be connected to the nozzle body 1 can be prepared at the lower portion of the column body, and the connection hole can form the second connection channel 42. The nozzle body 1 and the second connection channel 42 can be connected by an interference fit or can be connected by threading. The present invention does not specifically limit the connection manner between the nozzle body 1 and the second connection channel 42.

S4: Preparing a multi-step stepped hole at a middle portion of the column body, wherein the multi-step stepped hole is in communication with the first connection channel 41 and the second connection channel 42 respectively.

In some examples, a circular stepped hole can be prepared between the first connection channel 41 and the second connection channel 42 as a separation section 52, wherein the number of step levels can be 1 to 3, and as shown in FIG. 19, the number of step levels can preferably be 3.

S5: Providing a through flow guide hole 10 in the column body, the flow guide hole 10 and the multi-step stepped hole collectively enclosing a path for circulation of the filaments.

In some examples, the number of the flow guide holes 10 can be set to 1 to 4, and as shown in FIG. 20, the number of the flow guide holes 10 can preferably be 2, the shape of the flow guide holes 10 can be circular or other irregular shapes, and as shown in FIG. 20, the shape of the flow guide holes 10 can preferably be circular. Each flow guide hole 10 can preferably be communicated with a circular hole formed by the lowermost step level, or can be not communicated, and in the communicated case the feeding resistance of the filaments is smaller.

### Embodiment 5:

As shown in FIG. 28, a lower portion of the circulation channel 2 of the nozzle body 1 is provided with an opening/closing mechanism, the lower end of the circulation channel 2 is open when the opening/closing mechanism is in an open state, and the lower end of the circulation channel 2 is closed when the opening/closing mechanism is in a closed state.

At present, a nozzle merely prevents leakage by retracting the filaments, but the already melted filaments in the nozzle remain in the nozzle, and this portion of the filaments still flows out from the nozzle, resulting in a certain amount of leakage. The present invention is provided with the opening/closing mechanism, which can close the nozzle when material discharge is not needed, thereby preventing leakage.

In an implementation of the present embodiment, a lower end center of the quick-melting portion 3 is provided with a frustum-shaped upper cavity that is smaller at the top and larger at the bottom, a section of the circulation channel 2 of the nozzle body 1 located below the quick-melting portion 3 is provided with a frustum-shaped lower cavity that is larger at the top and smaller at the bottom, and a lower end of the circulation channel 2 is in a shape of a tapered hole that is larger at the top and smaller at the bottom;
the opening/closing mechanism includes an opening/closing ball 6 and a spring, the opening/closing ball 6 is located in a space formed by the upper cavity and the lower cavity, the spring is located below the opening/closing ball 6, and upper and lower ends of the spring respectively abut against the opening/closing ball 6 and a lower portion of the circulation channel 2; and
when the molten filaments flow downward, the flow of the molten filaments causes the opening/closing ball 6 to move downward, and the opening/closing mechanism is in the open state; and when the molten filaments do not flow downward, the spring drives the opening/closing ball 6 to move upward and abut against the upper cavity, and the opening/closing mechanism is in the closed state.

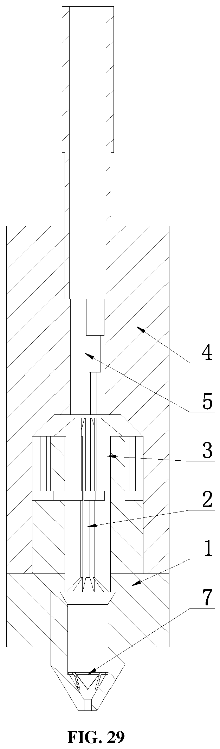

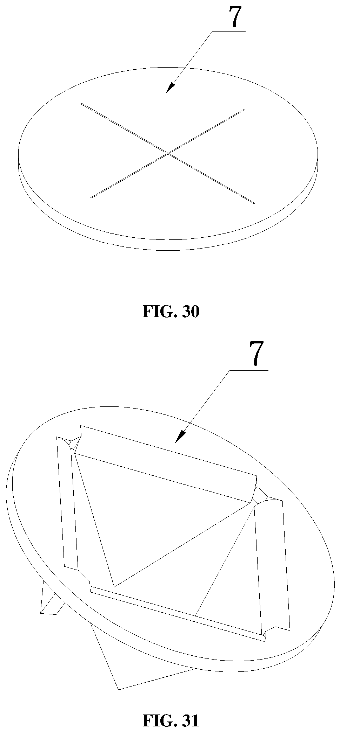

As shown in FIG. 29 to FIG. 31, in another implementation manner of the present embodiment, the opening/closing mechanism includes an opening/closing plate 7 made of an elastic material, the opening/closing plate 7 is transversely disposed and a periphery thereof is sealingly and fixedly connected to the inner wall of the circulation channel 2, a disconnection slit is provided at a middle portion of the opening/closing plate 7, and the disconnection slit divides the middle portion of the opening/closing plate 7 into a plurality of opening/closing segments; and
when the molten filaments flow downward, the flow of the molten filaments causes the opening/closing segments to fold downward, and the opening/closing mechanism is in the open state; and when the molten filaments do not flow downward, the elastic force of the opening/closing plate 7 itself causes the opening/closing segments to remain in a transverse state, and the opening/closing mechanism is in the closed state.

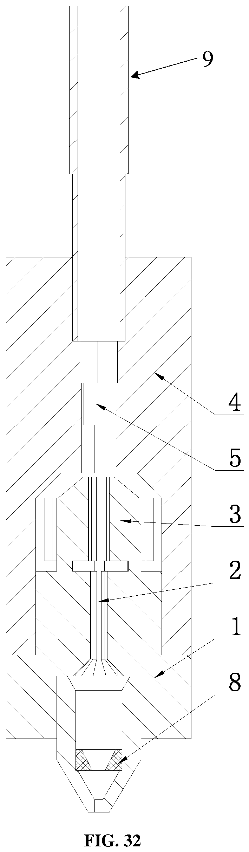

As shown in FIG. 32, in another implementation of the present embodiment, the opening/closing mechanism includes an opening/closing block 8 made of an elastic material, the opening/closing block 8 is transversely disposed and a periphery thereof is sealingly and fixedly connected to the inner wall of the circulation channel 2, a conical opening/closing hole that is larger at the top and smaller at the bottom is provided at a middle portion of the opening/closing block 8; when the molten filaments flow downward, the flow of the molten filaments causes a lower end of the opening/closing hole to expand outwardly, and the opening/closing mechanism is in the open state; and when the molten filaments do not flow downward, the elastic force of the opening/closing block 8 itself causes the lower end of the opening/closing hole to close inwardly, and the opening/closing mechanism is in the closed state.

### Embodiment 6:

As shown in FIG. 28, the nozzle includes a nozzle body 1, the nozzle body 1 is externally connected to a heat source, filaments are melted in the nozzle body 1 and extruded from a lower end of the nozzle body 1, a circulation channel 2 is provided in the nozzle body 1 in an axial direction of the nozzle body 1, a quick-melting portion 3 is provided at a lower portion of the circulation channel 2 and connected to the nozzle body 1, a gap is reserved between the quick-melting portion 3 and an inner wall of the circulation channel 2, and the molten filaments circulate at the gap between the quick-melting portion 3 and the inner wall of the circulation channel 2;
the nozzle further includes a preheating member 4, the preheating member 4 is disposed at a front end of the circulation channel 2 of the nozzle body 1, a preheating channel 5 is provided at a middle portion of the preheating member 4 in an axial direction thereof, a lower end of the preheating channel 5 is connected to the circulation channel 2 of the nozzle body 1, and the preheating member 4 is thermally connected to the heat source; and
a lower portion of the circulation channel 2 of the nozzle body 1 is provided with an opening/closing mechanism, the lower end of the circulation channel 2 is open when the opening/closing mechanism is in an open state, and the lower end of the circulation channel 2 is closed when the opening/closing mechanism is in a closed state.

Finally, it should be noted that: the above are merely embodiments of the present invention, and are not intended to limit the present invention. Although the present invention has been described in detail with reference to the foregoing embodiments, a person of ordinary skill in the art can still modify the technical solutions described in the foregoing embodiments or make equivalent substitutions for some technical features therein, without departing from the spirit and principles of the present invention. Any modification, equivalent substitution, or improvement made within the spirit and principles of the present invention shall be included in the protection scope of the present invention.

## Claims

1. A quick-melting nozzle for a 3D printer, wherein the nozzle comprises a nozzle body (1), the nozzle body (1) is externally connected to a heat source, filaments are melted in the nozzle body (1) and extruded from a lower end of the nozzle body (1), **characterized in that** a circulation channel (2) is provided in the nozzle body (1) in an axial direction of the nozzle body (1), a quick-melting portion (3) is provided at a lower portion of the circulation channel (2) and is connected to the nozzle body (1), a gap is reserved between the quick-melting portion (3) and an inner wall of the circulation channel (2), and the molten filaments circulate at the gap between the quick-melting portion (3) and the inner wall of the circulation channel (2).

2. The quick-melting nozzle for a 3D printer according to claim 1, wherein the quick-melting portion (3) is in a shape of a vertically disposed flat plate, the quick-melting portion (3) is disposed in a radial direction of the circulation channel (2), and two ends of the quick-melting portion (3) are connected to the inner wall of the circulation channel (2).

3. The quick-melting nozzle for a 3D printer according to claim 1, wherein the quick-melting portion (3) comprises two plate bodies disposed parallel and spaced apart from each other, the two plate bodies are disposed in a mirror-symmetrical manner with respect to an axial central plane of the circulation channel (2), and two ends of each plate body are connected to the inner wall of the circulation channel (2).

4. The quick-melting nozzle for a 3D printer according to claim 1, wherein the quick-melting portion (3) comprises a plurality of ridge blocks, the plurality of the ridge blocks are disposed on the inner wall of the circulation channel (2) along a height direction of the circulation channel (2), one side of each ridge block is connected to the inner wall of the circulation channel (2) and the other side of each ridge block extends toward a central axis of the circulation channel (2), a top surface of each ridge block is an inclined surface that is higher on the outside and lower on the inside, and the plurality of ridge blocks are circumferentially and uniformly distributed at intervals along the circulation channel (2).

5. The quick-melting nozzle for a 3D printer according to claim 1, wherein the quick-melting portion (3) comprises a tube body, the tube body is disposed at a lower portion of the circulation channel (2), a plate body is disposed between the tube body and the circulation channel (2), the plate body is disposed in a radial direction of the circulation channel (2), two ends of the plate body are respectively connected to an outer wall of the tube body and the inner wall of the circulation channel (2), and a plurality of plate bodies are circumferentially and uniformly distributed at intervals along the circulation channel (2).

6. The quick-melting nozzle for a 3D printer according to claim 1, wherein the quick-melting portion (3) comprises a spiral body, the spiral body is in a columnar spiral structure, and the spiral body is fixedly disposed at a lower portion of the circulation channel (2).

7. The quick-melting nozzle for a 3D printer according to claim 1, wherein the quick-melting portion (3) comprises two plate bodies disposed in a crossed arrangement, the two plate bodies are disposed in a cruciform shape, and two ends of each plate body are connected to the inner wall of the circulation channel (2).

8. The quick-melting nozzle for a 3D printer according to claim 1, wherein the quick-melting portion (3) comprises a column body, the column body is disposed at a lower portion of the circulation channel (2), an outer wall of the column body is connected to the inner wall of the circulation channel (2), a quick-melting hole is provided at a middle portion of the column body in an axial direction of the column body, the quick-melting hole is eccentrically disposed with respect to the circulation channel (2), and a plurality of quick-melting holes are circumferentially and uniformly distributed with respect to a central axis of the circulation channel (2).

9. The quick-melting nozzle for a 3D printer according to claim 1, wherein the quick-melting portion (3) comprises a plurality of block bodies, the plurality of block bodies are longitudinally stacked and laterally staggered and disposed at a lower portion of the circulation channel (2), each block body is in a shape of a semi-circular fan, a downward protruding strip is provided at a circumferential position of a lower surface of each block body, a circumferential side surface of each block body is in contact with the inner wall of the circulation channel (2), and a lower surface of the protruding strip of the block body located above is in contact with an upper surface of the block body located below.

10. The quick-melting nozzle for a 3D printer according to any one of claims 1-9, wherein the nozzle further comprises a preheating member (4), the preheating member (4) is disposed at a front end of the circulation channel (2) of the nozzle body (1), a preheating channel (5) is provided at a middle portion of the preheating member (4) in an axial direction of the preheating member (4), a lower end of the preheating channel (5) is connected to the circulation channel (2) of the nozzle body (1), and the preheating member (4) is thermally connected to the heat source.

11. The quick-melting nozzle for a 3D printer according to claim 10, wherein an upper portion of the preheating channel (5) is provided with an inlet section, the preheating channel (5) comprises one separation section (51) and a plurality of flow-guiding sections (52), the separation section (51) is coaxially disposed with the inlet section, the flow-guiding sections (52) are disposed at an outer side of the separation section (51), one side of each flow-guiding section (52) close to the separation section (51) is communicated with the separation section (51); and the separation section (51) is in a shape of a multi-step stepped hole that is larger at the top and smaller at the bottom.

12. The quick-melting nozzle for a 3D printer according to claim 11, wherein a side wall of the nozzle body (1) located within a cavity is provided with a concave capacity-increasing groove (1a), the capacity-increasing groove (1a) is disposed along a height direction of the nozzle body (1), and a plurality of capacity-increasing grooves (1a) are uniformly distributed along an outer wall of the nozzle body (1).

13. The quick-melting nozzle for a 3D printer according to any one of claims 1-9, wherein a lower portion of the circulation channel (2) of the nozzle body (1) is provided with an opening/closing mechanism, the lower end of the circulation channel (2) is open when the opening/closing mechanism is in an open state, and the lower end of the circulation channel (2) is closed when the opening/closing mechanism is in a closed state.

14. A preheating member, **characterized in that** the preheating member (4) is disposed at a front end of the circulation channel (2) of the nozzle body (1), and the preheating member (4) is provided with a preheating channel (5) in an axial direction thereof.

15. The preheating member according to claim 14, wherein the preheating channel (5) comprises a separation section (51), the separation section (51) is coaxially disposed with the preheating channel (5), and the separation section (51) is configured to remove an outer periphery of the filaments.

16. The preheating member according to claim 14, wherein the separation section (51) is in a shape of a multi-step stepped shape that is larger at the top and smaller at the bottom.

17. The preheating member according to claim 14, wherein a shape of a cross-sectional contour of the separation section (51) is a quadrilateral.

18. The preheating member according to claim 14, wherein the cross-sectional contour of the separation section (51) comprises a plurality of arc segments located on a same circle, and a groove extending outwardly in a radial direction of the circle is formed between two adjacent arc segments.

19. The preheating member according to claim 14, wherein the preheating channel (5) further comprises at least one flow-guiding section (52), the flow-guiding section (52) is disposed parallel to an axis of the preheating channel (5), and the flow-guiding section (52) is configured to guide the outer periphery of the filaments.

20. The preheating member according to claim 19, wherein a cross-sectional area of the flow-guiding section (52) is equal everywhere in an axial direction of the preheating channel (5).

21. The preheating member according to claim 19, wherein the cross-sectional contour of the flow-guiding section (52) comprises a plurality of sub-contours (524), and the plurality of sub-contours (524) are symmetrically distributed with respect to a central axis of the preheating channel (5).

22. The preheating member according to claim 21, wherein a shape of each sub-contour (524) is a "V" shape; or, a shape of each sub-contour (524) is circular.

23. The preheating member according to claim 19, wherein the cross-sectional contour of the flow-guiding section (52) comprises at least two arc-shaped sub-contours, and the at least two arc-shaped sub-contours are symmetrically distributed with respect to the central axis of the preheating channel (5).

24. The preheating member according to claim 19, wherein the cross-sectional contour of the flow-guiding section (52) comprises three vertex angles (525), the three vertex angles (525) are symmetrically distributed with respect to the central axis of the preheating channel (5), and angles of the three vertex angles (525) are identical and are acute angles.

25. A preparation method for a preheating member, **characterized in that** the preparation method is used for preparing the preheating member according to any one of claims 14 to 24, the preparation method comprising:
providing a column body made of a high thermal conductivity material;
preparing, at an upper portion of the column body, a first connection channel (41a) configured to be connected to a heat break (9);
preparing, at a lower portion of the column body, a second connection channel (42a) configured to be connected to the nozzle body (1);
providing a stepped hole at a middle portion of the column body, wherein the stepped hole is in communication with the first connection channel (41a) and the second connection channel (42a) respectively; and
providing a flow guide hole (10) in a step of the stepped hole.
